# EUROPEAN PATENT SPECIFICATION

(11) **EP 0 954 953 B1**
(45) Date of publication and mention of the grant of the patent: **03.09.2003**
(21) Application number: 99201171.8
(22) Date of filing: 14.04.1999
(51) Int. Cl.: A01B 33/12

(54) **Ground milling machine provided with a cover mounted across the milling members**
Grundmühle mit über der Breite der Mühlelemente angeordnetem Schirm
Machine pour mouler la terre, avec écran monté au dessus la largeur des éléments moulants

(30) Priority: 28.04.1998 NL 1009016
(43) Date of publication of application: 10.11.1999
(73) Proprietor: Netagco AVR N.V., 8800 Roeselare (BE)
(72) Inventor: Lerink, Peter, 3271 AJ Mijnsherenland (NL)
(74) Representative: de Vries, Johannes Hendrik Fokke

(56) References cited:
- AU-B- 252 068
- US-A- 3 768 572
- US-A- 4 254 834

## Description

The invention relates to a ground milling machine as described in the preamble of claim 1.

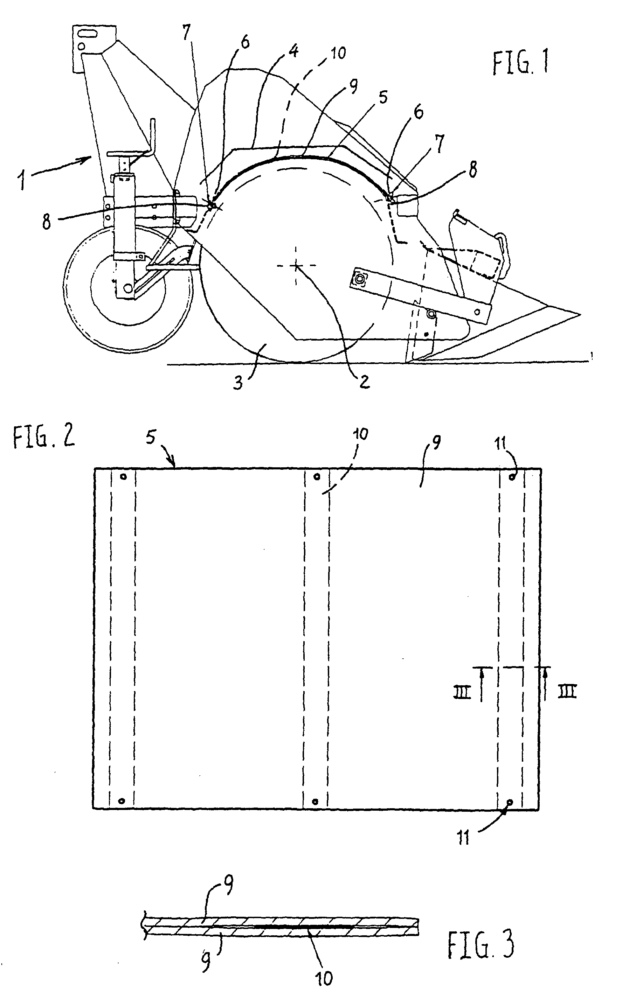

Such a machine is known by AU 252 068-B, in particular by figure 3 of this. This shows an inner cover consisting of three succeeding elements of a flexible material, each being connected to the outer cover by means of bolts. By this the flexibility of the elements is limited and ground may stick to the elements just at the place of the bolts and will not be easely removed from these places. Further the mounting of the elements will be cumbersome.

The object of the invention is to remove these disadvantages and this is obtained by applying the features as indicated in the characterizing portion of claim 1.

In their original position, the strips will be straight and on mounting the mat they will be arched as a result of which the mat need not be supported between its end edges. Owing to that, mounting the mat is relatively simple.

In particular, the strips made of spring steel will have been received between two layers of rubber connected to each other by means of vulcanisation or by a similar method.

In principle, it would also be possible to make the mat that strong, that it continues taking up the desired form between its end edges. Here, the difficulty is that the action of the mat might get insufficient. Further, there is a risk, that due to heavy lumps hitting one side of the mat, it will be stricken against the milling members with its other side, with all its difficulties.

In connection with that, the mat will not be made too thick and it is desirable to support the mat in such a way that it substantially continues assuming the desired form. In addition to the previously described way of applying strips of spring steel, this could also be achieved by e.g. resilient members which are connected to the mat and the cover. Said members can be e.g. draw springs which are connected to the mat at one side and to the cover at the other by means of bolts. However, then mounting the mat will not be easy, and vulnerable fastening points may arise.

One may also consider mounting pins provided with heads on which the mat rests, to the mat, in which said pins project through slotted holes in the mat. By the provision of the slotted holes, the mat is allowed to slide over the heads of the pins. However, this again entails vulnerable supporting points.

The invention is further explained by way of an embodiment, shown in the drawing, in which:
Fig. 1 shows schematically an elevational view of a ground milling machine with a mat according to the present invention mounted therein;
Fig. 2 shows a view of the mat in spread-out state, on an enlarged scale in relation to Fig. 1; and
Fig. 3 shows a cross-section across a part of the mat according to the line III - III of Fig. 2, but on an enlarged scale.

Fig. 1 shows a ground milling machine 1 as can be fastened to the three-point suspension of a tractor. The machine comprises the rotor 3 which is only schematically illustrated, rotatable around the horizontal shaft 2, and provided with the milling members not further illustrated. The cover 4 is mounted across the rotor 3. The other components of the machine are known per se and thus not described further.

Within the cover 4, at a certain distance from the outer circumference of the rotor 3, there is the mat 5 made of a flexible material such as rubber, for example. At its end edges 6, the mat is fixed to frame portions 8 of the machine 1 by means of nut bolts. To that end, one could use e.g. bolts with wing nuts.

Figs. 2 and 3 show the construction of the mat 5. It consists of two layers of rubber 9 with a number of strips 10 of spring steel inbetween. The two layers of rubber 9 can be connected to each other by means of vulcanisation, for example, so that the strips 10 are situated at the proper position in the mat. The strips 10 and the layers 9 are provided with openings 11 through which the bolts 7 can be passed.

Thus, the mat 5 need not be supported between its end edges 6. Due to this, mounting the mat becomes simple.

It will be obvious, that only one possible embodiment of a mat and its fastening according to the invention have been illustrated in the drawing and described above and that many changes can be made without leaving the inventive idea, as it is indicated in the enclosed claims.

## Claims

1. Ground milling machine (1) provided with a rotor (3) comprising milling members situated on a horizontally rotatable shaft (2), a metallic cover (4) being mounted across said rotor (3), said cover substantially having the shape of a part of a cylinder and within which cover an inner cover is mounted consisting of at least one element (5) made of a flexible material, such as rubber or a similar material, **characterized in that**, said inner cover is in the shape of one single flexible mat (5) the two end edges (6) of which, as seen in horizontal direction, are situated substantially in front of and behind the shaft (2) of said rotor (3) and extend parallel to it, the flexible supporting of said mat (5) being achieved by strips (10) of a resilient material such as spring steel incorporated in said mat and extending between its end endges (6), the ends of said strips (10) each being secured to a stiff frame portion (8) or to a frame portion movable within defined limits.

2. Ground milling machine according to claim 1, **characterized in that** the strips (10) of spring steel incorpoerated in said mat (5) are received between two layers of rubber (9) connected to each other by means of vulcanisation or a similar method.

## Patentansprüche

1. Maschine (1) zum Bearbeiten des Bodens durch Fräsen, mit einem Rotor (3) mit Fräselementen, die sich an einer horizontal drehbaren Welle (2) befinden, und mit einer metallischen Abdeckung (4), die über den Rotor (3) hinüber montiert ist, wobei die Abdeckung im wesentlichen die Gestalt eines Teils eines Zylinders hat, wobei innerhalb dieser Abdeckung eine innere Abdeckung angebracht ist, die zumindest aus einem Element (5) besteht, das aus einem flexiblen Material. wie beispielsweise Gummi oder einem ähnlichen Material gemacht ist,
**dadurch gekennzeichnet, dass**
die innere Abdeckung die Gestalt einer einzelnen flexiblen Matte (5) hat, deren beide Kanten (6), gesehen in horizontaler Richtung, sich im wesentlichen vor und hinter der Welle (2) des Rotors (3) befinden und sich parallel dazu erstrecken, wobei die flexible Lagerung der Matte (5) durch Streifen (10) aus einem elastischen Material wie beispielsweise Federstahl erreicht wird, die in der Matte eingearbeitet sind und sich zwischen ihren Endkanten (6) erstrecken, wobei die Enden der Streifen (10) jeweils an einem steifen Rahmenbereich (8) angebracht sind oder an einem Rahmenbereich, der innerhalb bestimmter Grenzen beweglich ist.

2. Maschine zum Bearbeiten des Bodens nach Anspruch 1,
**dadurch gekennzeichnet, dass** die Streifen (10) aus Federstahl, die in die Matte (5) eingearbeitet sind, zwischen zwei Gummischichten (9) aufgenommen sind, die miteinander durch Vulkanisieren oder ein ähnliches Verfahren verbunden sind.

## Revendications

1. Machine à malaxer la terre (1) munie d'un rotor (3) comprenant des éléments malaxeurs situés sur un arbre rotatif horizontalement (2), un capot métallique (4) étant monté sur ledit rotor (3), ledit capot ayant sensiblement la forme d'une partie d'un cylindre et à l'intérieur duquel capot est monté un capot intérieur consistant en au moins un élément (5) réalisé à partir d'un matériau souple, tel que du caoutchouc ou un matériau similaire, **caractérisé en ce que** ledit capot intérieur se présente sous la forme d'un simple tapis souple (5) dont les deux bords d'extrémité (6), vus dans la direction horizontale, sont situés sensiblement devant et derrière l'arbre (2) dudit rotor (3) et s'étendent parallèlement à celui-ci, le support souple dudit tapis (5) étant obtenu par des bandes (10) en un matériau élastique tel que de l'acier à ressort, incorporées dans ledit tapis et s'étendant entre ses bords d'extrémité (6), les extrémités desdites bandes (10) étant fixées sur une portion de châssis rigide (8) ou sur une portion de châssis mobile dans des limites définies.

2. Machine à malaxer la terre selon la revendication (1), **caractérisée en ce que** les bandes (10) en acier à ressort incorporées dans ledit tapis (5) sont logées entre deux couches de caoutchouc (9) reliées en elles par vulcanisation ou un procédé similaire.
